# EUROPEAN PATENT APPLICATION

(11) **EP 4 524 548 A1**
(43) Date of publication of application: **19.03.2025**
(21) Application number: 23472009.2
(22) Date of filing: 14.11.2023
(51) Int. Cl.: G01N 21/17, G01N 27/07, G01N 33/487

(54) **METHOD AND DEVICE FOR CONTACTLESS DETECTION OF EMBEDDED FUNCTIONALIZED CARBON NANOTUBES IN A BIOMEMBRANE**

(30) Priority: 13.09.2023 BG 11377723
(71) Applicant: Institute of Mechanics at Bulgarian Academy of Science, 1113 Sofia (BG)
(72) Inventor: Ivanov, Ognyan Dinev, 1700 Sofia (BG); Naradikyan, Harityun Markar, 1715 Sofia (BG); Petrov, Minko Parvanov, 1715 Sofia (BG); Kostadinov, Kostadin Grozev, 1618 Sofia (BG)
(74) Representative: Stefanov, Stefan Angelov

(57) **Abstract**

Method and device for contactless detection of embedded properly functionalized carbon nanotubes in a biomembrane by means of the electromagnetic echo effect, with application in medicine, pharmacy/pharmacology and chemical technology.

## Description

### Field of technology

The invention concerns method and device for contactless detection of embedded suitably functionalized carbon nanotubes in a biomembrane by means of the electromagnetic echo effect, with application in medicine, pharmacy/pharmacology and chemical technology.

### Prior art

Phospholipids are essential building blocks of cell membranes, which separate the living unit from the surrounding environment. The phospholipid molecules consist of a phosphate-containing hydrophilic head group and two hydrophobic fatty acid chains linked by means of glycerol, thus making them more rigid. All lipids are poorly soluble in water, but due to their unique stoichiometry, they self-assemble in aqueous solutions as bilayers, with the hydrophobic tails buried in the interior of the membrane, and the polar hydrophilic head groups exposed on both sides outside in contact with the water. That hydrophobic effect lies in the basis of the formation of lipid bilayers and ensures the primary interaction between the hydrophobic phospholipid acyl chains, on one hand, and between the phospholipid acyl chains and any included in the phospholipid matrix nanoparticles, known as dopants, regardless of their nature and shape, on the other hand. [1] Such a self-assembled planar bilayer structure is a convenient model for fundamental investigations of the physicochemical processes in the biological membrane. In this way we don't need to study the physical properties and functions of the separate lipid molecule [2, 3, 4]. The Electromagnetic echo effect, which we apply for investigation of physical and structural properties of these lipid bilayers with embedded properly functionalized carbon nanotubes, requires that bio membrane to be formed on a solid substrate, which we use in the hybrid cell. Such a system provides wide and flat areas - domains, convenient for exploration/investigation by Electromagnetic echo effect. The inclusion of carbon nanotubes in phospholipid-bilayers may alter the local structure and dynamics of bio membranes [5]. Suitably functionalized carbon nanotubes with well-defined shape and size are able to create trans-membrane channels into the bio membrane [5,6]. There are couple of techniques, which could be used for investigation of structural, thermal and physicochemical properties of the model bio membrane and bio-nanocomposites such as: Differential scanning calorimetric (DSC) analysis [2,3], X-ray diffraction, Impedance spectroscopy, Raman spectroscopy and Fourier transform infrared (FTIR) spectroscopy [4].

Comparably closer to the suggested innovation is Raman spectroscopy. That is a technique for physicochemical analysis which analyses the interaction of monochromatic light with the chemical bonds inside of different materials. The substance under investigation is subjected to an incident laser beam and the light scattered by the sample is analyzed by an embedded spectrophotometer. Such a result gives us detailed information about the substance and could be used for identification, defining the quantity, structure and chemical composition. The Raman spectra are like chemical fingerprints. There are referent libraries with already recorded spectra. In this way one could clearly distinguish one chemical component from others. That provides us with information about the investigated sample, its chemical composition, properties, polymorphism, inclusions and imperfections [7,8].
Disadvantages of this method are:
1. The Raman spectroscopy requires registration of the scattered by that substance intensive laser light. Most of the scattered light is with the same wavelength as the incident laser light and doesn't give us useful information - it is Rayleigh scattering. Despite that small amount of light with different wavelengths (about 0,0000001%) is scattered, which depends on the chemical composition of the studied substance. Namely that is Raman scattering.
2. This method requires a complex technique, which needs experienced operators. It consists of components such as laser sources and optics for capturing and analyzing the scattered light from another complicated device - a spectrophotometer with a very wide band of wave lengths - from UV to Infrared regions in the electromagnetic spectrum. That involves very expensive equipment.
3. Very often the samples are subjected to irradiation with very intensive laser light, which leads to their degradation, because the energy of the photon is higher.
4. The sensor of the analyzing spectrophotometer consists of a CCD matrix, which often needs cooling. It is realized by Peltier element for temperatures down to - 90°C, but for special investigations liquid nitrogen is required.

Some other methods and devices, which are comparable with the suggested innovation, are the two registered patents: BG67179B1, "Contactless detection of phase transitions in liquid crystals by laser induced surface photo-charge effect by measurement of electrical signal" [9] and BG67262B1, "Optimization of the cleaning properties of fog using sensor, operating on the basis of laser induced surface photo-charge effect, by measurement of electrical signals" [10]. Both patents use contactless detection. In the patent BG67179B1 phase transitions in liquid crystals are detected by means of laser induced surface photo-charge effect, which is characterized by that the device consists of a liquid crystal cell, which is glass substrate covered with transparent conductive layer and the other one is made from semiconductor material, between them the liquid crystal is loaded/placed. The liquid crystal cell is irradiated by a modulated laser beam, which induces electrical signal from the surface photo-charge effect, being measured by a voltmeter, and the amplitude of that signal alters, when phase transition in the liquid crystal appears. Both methods are not applicable for contactless detection of dopants in the phospholipid model bio membrane.

### Technical essence

The aim of the invention is to create such method and device which are not so expensive don't need highly educated and experienced personnel for the investigations, the amplitude of the detected signal must be convenient for measurement with a simple voltmeter, the sensor cell does not need additional cooling to achieve better results. The modulated laser beam, which irradiates the sensor cell, does not need to be with high intensity.

That aim of the invention is completed/achieved by the suggested method and apparatus for contactless detection of the presence of embedded suitably functionalized carbon nanotubes in the bilayer phospholipid bio membrane by means of measuring an electrical signal, induced in the bio nanocomposite under investigation by the electromagnetic echo effect, which depends on the structure and concentration of the embedded carbon nanotubes in the pure phospholipid.

According to the proposed method for contactless detection of embedded suitably functionalized carbon nanotubes in the bio membrane, this is accomplished by means of the electromagnetic echo effect by measurement of the alteration in the interface of the substance under investigation, which is loaded in the hybrid cell. Initially, at room temperature the hybrid cell is loaded with suitable hydrated pure phospholipid, and it is irradiated by a modulated laser beam using one function generator. In this way, an electrical signal caused by Electromagnetic echo effect is induced and is measured by a voltmeter and recorded into thermograms of phase transition in the pure phospholipid, at different temperatures from -2°C to +48°C, achievable by means of Peltier module and thermocontroler. After that the above described procedure is repeated, but now the hybrid cell is loaded with the same amount of bionanocomposite, which is composed of a hydrated phospholipid membrane and embedded suitably functionalized carbon nanotubes, in this way the interfaces of that substance changes and that is the reason for alteration of the electrical signal, produced by the electromagnetic echo effect, which is registered at appearance of phase transition in the bionanocomposite substance under investigation at heating and as well at cooling. It is possible to make a calibration and in this way, one could obtain/measure the exact concentration of embedded functionalized carbon nanotubes in the bionanocomposite, which allows the registration of critical concentration, at which the biomembrane collapses.

The device for contactless detection of embedded suitably functionalized carbon nanotubes in the bilayer phospholipid biomembrane by means of the electromagnetic echo effect consists of a hybrid cell which includes one transparent plate with covered conductive layer on to lower side, in contact with the upper interface of the substance under investigation, the last one being in contact trough the lower interface with the semiconductor substrate. The conductive layer by means of one electrode is connected with one voltmeter. A modulated laser beam, directed over the loaded hybrid cell is realized by means of a laser module connected with a function generator. Under that hybrid cell there is a thermally conductive plate, placed above one Peltier module, which is connected to one thermocontroller. One radiator is situated under the Peltier module.

### Description of included figures

Fig.1 is schematics of the experimental device for contactless detection of embedded suitably functionalized carbon nanotubes into bilayer phospholipid biomembrane by means of measurement of one electrical signal generated by the electromagnetic echo effect, where:
   1. Voltmeter
   2. Function generator
   3. Laser module
   4. Modulated laser beam
   5. Hybrid cell
   6. Thermocontroller
   7. Peltier module
   8. Thermally conductive plate
Fig.2 is the structure of the sensor hybrid cell loaded with liquid bilayer for detection of embedded suitably functionalized carbon nanotubes into the bilayer phospholipid biomembrane by means of measurement of one electrical signal, generated by the electromagnetic echo effect, where:
   G - glass plate
   L - bionanocomposite
   I₁, I₂ - interfaces
   S - semiconductor substrate
   E - conductive layer

### Example implementation

The method of detection of dopants in a model phospholipid biomembrane consists of the following: In the contactless detection of embedded functionalized carbon nanotubes into the biomembrane, first we load the sensor hybrid cell with emulsion of pure phospholipid, irradiate it by a modulated laser beam and after that the amplitudes of the electrical signals obtained via the electromagnetic echo effect are recorded at different temperatures. In this way, we obtain the thermograms of the characteristic biomembrane phase transition gel-liquid crystal state of the pure biomembrane, at heating and at cooling, using for that purpose only one Peltier module. After that, for the contactless detection of embedded dopants into the phospholipid biomembrane, we load again the sensor hybrid cell with the same quantity/amount of bionanocomposite consisting of hydrated mixture of pure phospholipid biomembrane and suitably functionalized carbon nanotubes. Again, we irradiate the already loaded with bionanocomposite sensor cell and the obtained electrical signals from the electromagnetic echo effect are recorded. By the amplitude of that signal and by the temperature at which the phase transition appears, it can be clearly determined if there are dopants and what their concentration into the phospholipid biomembrane is.

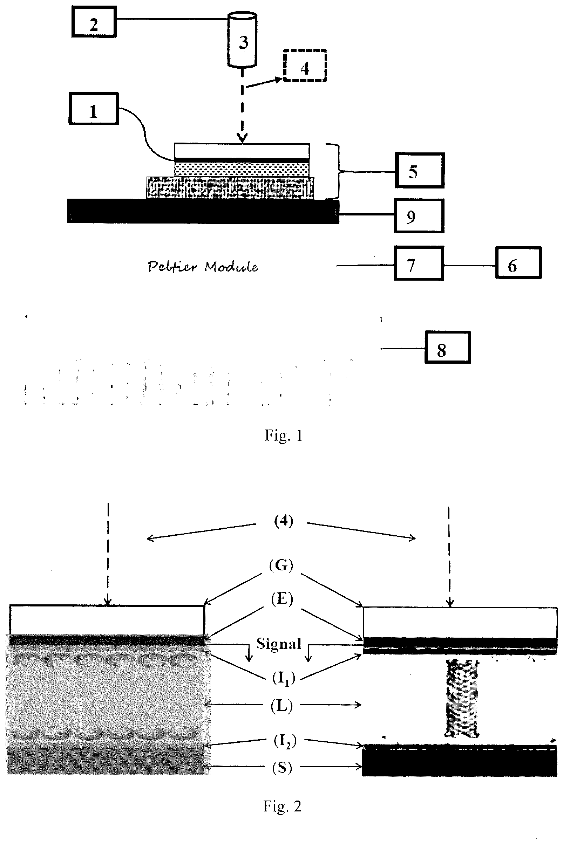

One example of implementation of that method for contactless detection of embedded functionalized carbon nanotubes in a phospholipid biomembrane consists of the following operations. At first, the substance under investigation should be loaded into hybrid cell 5, consisting of one glass plate G, covered with transparent conductive layer E, and another plate S made of semiconductor material - Si, GaAs, or GaP, both divided by means of Mylar spacers with thickness about d=20 µm (not showed in Fig.2). That structure is placed over one thermally conductive substrate 9, whose lower side is in contact with the Peltier module 7. Using one automatic micropipette, initially at room temperature, the hybrid cell is loaded with suitably hydrated pure phospholipid. The whole structure is irradiated by a modulated laser beam 4, generated by the laser 3, connected with the function generator 2, the electrode of the conductive layer E from the hybrid cell 5 being connected to the nanovoltmeter 1, which registers/measures the generated electrical signal from electromagnetic echo effect. So, at this temperature, after the hybrid cell has been irradiated by the modulated laser beam, the electrical signal generated by electromagnetic echo effect is measured. After that the same signal is registered and measured at different temperatures from -2 to +48°C. In this way, the thermograms with the point of phase transition in the pure phospholipid are obtained. The temperature is adjusted by means of one Peltier module 7, which is connected to the thermocontroller 6.

The procedure described above is repeated with the same hybrid cell, but already loaded with bionanocomposite, consisting of one hydrated emulsion of phospholipid membrane and embedded inside suitably functionalized carbon nanotubes. Applying one automatic micropipette assures that the cell is loaded with the same amount of bionanocomposite substance as in the case with the pure phospholipid.

The essence of the method for contactless detection of embedded suitably functionalized carbon nanotubes into the biomembrane is that the amplitude of the signal, generated from bionanocomposite is different from the signal from the pure phospholipid at the same temperature. Also, the shape and the point of phase transition obtained from both substances are different. All that is a consequence of the addition of embedded nanoparticles into the phospholipid biomembrane, which leads to alteration in the interfaces I₁ 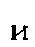 I₂ After suitable calibration, the exact concentration of embedded functionalized carbon nanotubes into the biomembrane is measured, which is essential information for the bio pharmaceutical industry.

The experimental set up of the device for detection of embedded suitably functionalized carbon nanotubes in the bilayer phospholipid biomembrane is showed in Fig. 1. The device includes sensor hybrid cell 5, irradiated by solid-state laser module 3. The beam is modulated by function generator 2, which provides a referent signal for the nanovoltmeter 1 as well. That nanovoltmeter measures the induced electrical signals, generated from interfaces I₁, I₂ of the sensor hybrid cell 5, via the electromagnetic echo effect.

The structure of hybrid cell 5 is showed with details in Fig. 2. It includes modulated laser beam 4, glass plate G, liquid phospholipid bilayer L, interfaces I₁, I₂, semiconductor substrate S, electrode of the conductive layer E, outputting the obtained signal (Signal) to the voltmeter 1. If the composition of the structure of the liquid bilayer is changed, this will lead to alteration of interfaces I₁, I₂ as well. In this way, the amplitude of the obtained signal strongly depends on the composition and the structure of that liquid bilayer. When the liquid bilayer consists only of pure phospholipid, then there is no alteration in the amplitude of the signal and the recorded phase transition thermograms are with well-defined shape, but when suitably functionalized carbon nanotubes are embedded into phospholipid, this leads to alteration in the interfaces I₁, I₂ from which the signal is generated. In this way, the signal measured by voltmeter 1 and the recorded thermograms from the new bionanocomposite substance reflect these alterations and in fact are a function of the concentration of the functionalized carbon nanotubes embedded into the biomembrane.

### References:

[1] (https://www.nature.com/scitable/topicpage/cell-membranes-14052567/).
[2] Julia Genova, Hassan Chamati, Zdravka Slavkova , Minko Petrov, Differential Scanning Calorimetric Study of the Effect of Cholesterol on the Thermotropic Phase Behavior of the Phospholipid 1-Stearoyl-2-Oleoyl-sn-Glycero-3-Phosphocholine, J Surfact Deterg (2019), DOI 10.1002/jsde.12289.
[3] Julia Genova, Zdravka Slavkova, Hassan Chamati & Minko Petrov (2019): Gel-liquid crystal phase transition in dry and hydrated SOPC phospholipid studied by differential scanning calorimetry, Phase Transitions, Doi: 10.1080/01411594.2019.1580368 https.7/doi.org/10.1080/01411594.2019.1580368
[4] J. Genova, M. Petrov, I. Bivas, P. Rafailov, H. Naradikian, B. Katranchev, Fourier transform infrared and Raman characterization of bilayer membranes of the phospholipid SOPC and its mixtures with cholesterol, Colloids Surf. Physicochem. Eng. Asp.557 (2018) 85e93, https://doi.org/10.1016/j.colsurfa.2018.04.044.
[5] Genova J, Chamati H, Petrov M, Study of SOPC with embedded pristine and amide-functionalized single wall carbon nanotubes by DSC and FTIR spectroscopy, Colloids and surfaces A: Physicochemical and Engineering Aspects (2020), Doi: https://doi.org/10.1016/j.colsurfa.2020.125261
[6] X. Li, Y. Shi, B. Miao, Y. Zhao, Effects of Embedded Carbon Nanotube on Properties of Biomembrane, J. Phys. Chem. B. 116 (2012) 5391-5397 https://doi.org/10.1021/jp301864z.
[7] Vandenabeele, Peter, Practical Raman Spectroscopy-An Introductio, First published:9 July 2013, Print ISBN:9780470683194 |Online ISBN:9781119961284 |DOI:10.1002/9781119961284, Copyright ⓒ 2013 John Wiley & Sons, Ltd.
[8] Smith, Ewen. Modern Raman spectroscopy: a practical approach / Ewen Smith, Geoff Dent. p. cm. Includes bibliographical references and index. ISBN 0-471-49668-5 (cloth : alk. paper) - ISBN 0-471-49794-0 (pbk. : alk. paper) 1. Raman spectroscopy. 1. Dent, Geoffrey. II. Title. QD96.R34S58 2005 535.80 46-dc22 2
[9] Patent: BG 67179 B1 issued on 16.03.2021.
[10] Patent: BG 67262 B1 issued on 16.03.2021.

## Claims

1. Method for contactless detection of embedded functionalized carbon nanotubes into biomembrane by means of the electromagnetic echo effect and measurement of the alteration in the interface of the substance under investigation, **characterized by** the fact that initially at room temperature, the hybrid cell (5) is loaded with suitably hydrated pure phospholipid and irradiated with a modulated laser beam (4), generated by laser (3), modulated by function generator (2), in this way an electrical signal is induced due to the electromagnetic echo effect, which is measured by voltmeter (1) and is recorded in the thermograms of the phase transition of the pure phospholipid at different temperatures from -2°C to +48°C, controlled by the cooling-heating Peltier module (7) and the thermocontroller (6), after that the procedure described above is repeated with the same hybrid cell, but already loaded with the same amount of bionanocomposite, consisting of one hydrated emulsion of phospholipid membrane and embedded inside suitably functionalized carbon nanotubes, in which the alteration in interfaces (I₁ and I₂) of this substance leads to an alteration in the electrical signal from the electromagnetic echo effect and is registered exactly during the phase transition in the substance under investigation thus loaded in the hybrid cell (5) at heating as well as at cooling, and after calibration, the exact concentration of the functionalized carbon nanotubes in the biomembrane is measured.

2. Device for contactless detection of embedded functionalized carbon nanotubes in the biomembrane, consisting of a hybrid cell, a laser module, a generator and a voltmeter, **characterized by** the fact that the cell (5) is hybrid, consisting of transparent plate (G), covered with conductive layer (E), which through its lower side is in contact with the interface (I₁), borders with the bionanocomposite under investigation (L), bounded below through interface (I₂) of the semiconductor substrate (S), connected by a thermally conductive substrate (9) to the upper part of one Peltier module (7), which is connected to the thermocontroller (6), and under the Peltier module radiator (8) is placed, whereby the modulated laser beam (4), which is directed over the transparent plate (G) of the loaded with the bionanocomposite (L) hybrid cell (5), is realized by laser module (3), which is connected to the function generator (2), and through electrode of the conductive layer (E) adherent to the hybrid cell (5) is connected to the voltmeter (1) by which the signal from the electromagnetic echo effect is registered.
